# EUROPEAN PATENT SPECIFICATION

(11) **EP 3 875 055 B1**
(45) Date of publication and mention of the grant of the patent: **07.08.2024**
(21) Application number: 20217561.8
(22) Date of filing: 02.04.2013
(51) Int. Cl.: A61C 17/02

(54) **AIR/WATER DENTAL SYRINGE TIP ADAPTER SYSTEMS AND CONVERSION METHODS**
SPITZENADAPTERSYSTEME FÜR ZAHNÄRZTLICHE WASSER/LUFT-SPRITZE UND UMWANDLUNGSVERFAHREN
SYSTÈMES ADAPTATEURS ET PROCÉDÉS DE CONVERSION D'EMBOUT DE SERINGUE DENTAIRE À AIR/EAU

(30) Priority: 03.04.2012 US 201261619578 P; 15.03.2013 US 201313841280
(43) Date of publication of application: 08.09.2021
(62) Divisional of application: 13724920.7
(73) Proprietor: Berkely, Donovan, Allen, TX 75002 (US)
(72) Inventor: Berkely, Donovan, Allen, TX 75002 (US)
(74) Representative: Brantsandpatents bv

(56) References cited:
- WO-A1-00/33762
- US-A- 5 192 206
- US-A- 5 899 692
- US-A1- 2001 041 321

## Description

### FIELD OF THE INVENTION

This invention relates generally to air/water syringes and, in particular, to adapter units that enable replaceable, disposable tips to be used with various handle assemblies including European style syringes.

### BACKGROUND OF THE INVENTION

Dental syringes are hand-held instruments which deliver water and air under pressure into a patient's mouth for washing and drying purposes. Such instruments are widely used by dentists, orthodontists, oral surgeons, dental hygienists and dental assistants. A typical dental includes a head unit which is coupled to hoses that supply water at about 40 PSI and air at about 80 PSI. An elongated tip coupled to the head unit is inserted into a patient's mouth, and buttons on the head unit are operated to discharge water or air through the distal end of the tip.

Cross contamination is one of the principal problems encountered with dental syringes. Bacteria and viruses can be communicated from patient to patient unless the syringe tip is adequately sanitized. The safest and most desirable approach is to replace the syringe tip from the head after each patient treatment. In addition, it is desirable to be able to replace worn tips or change to tips of different configurations quickly and easily.

Several decades ago, dental syringe tips were not readily removable from the syringe head units. Removal often necessitated the unscrewing of a coupling from the head and the sliding of the coupling off of the tip. Around this time, the tip once removed and the associated coupling were autoclaved. A number of small elastomeric O-rings had to be removed before autoclaving because they could not withstand the heat and pressure of the autoclaving process. The entire process was a time consuming, often frustrating experience.

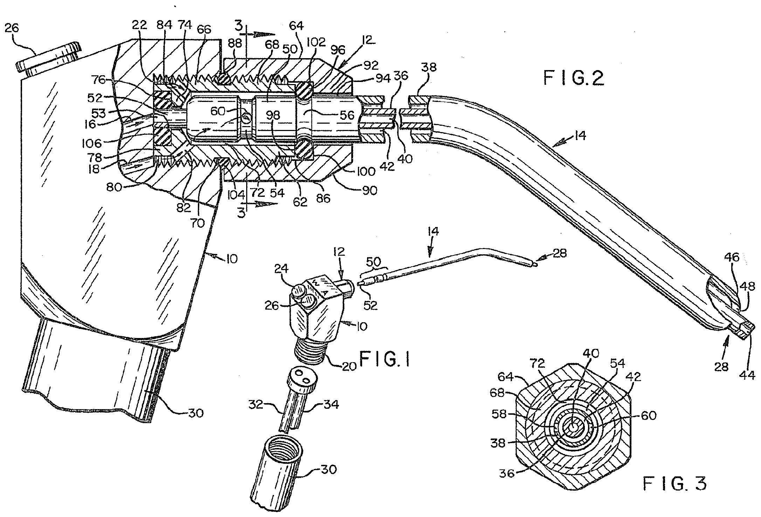

Around 1980, dental syringe quick-disconnect tips were invented. U.S. Patent No. 4,248,589 discloses a dental syringe that includes a head 10, a coupling 12, and a removable, replaceable tip 14 (Figure 1). The head 10 has internal water and air passages 16 and 18 in communication with an internally threaded cylindrical cavity 22 in the top frontal surface of the head (Figure 2). The head and tip include a corresponding number of fluid passages. The coupling 12 includes a cylindrical base and a lock nut which screws over the base. The base and the lock nut define an axially extending bore which communicates with the passages through the head and removably receives the rearward portion of the tip 14. An elastomeric O-ring is positioned between the base and the lock nut and surrounds the bore. When the rearward portion of the tip is fully inserted in the bore the O-ring seats in a groove surrounding the rearward portion of the tip. When the lock nut is fully screwed over the base, deformation of the O-ring is substantially prevented and the tip cannot be withdrawn or ejected from the coupling.

The tip 14 comprises inner and outer elongate, coaxial, spaced apart pipes 36 and 38 which define water and air passages 40 and 42, respectively. The forward portions of the pipes are angled with respect to the rearward portions. The forward end 44 of the inner pipe 36 is open and the forward end 46 of the outer pipe 38 is bent inwardly and is sealed to the inner pipe 36. The forward end 46 has a plurality of annularly spaced nozzle apertures such as 48.

The rearward portion 50 of the outer pipe 38 terminates short of the rearward portion 52 of the inner pipe 36 and is bent inwardly and sealed to the rearward portion 52. The rearward end 53 of the inner pipe 36 is open and coaxial with the water passage 16 and abuts the bottom of the cavity 22 when inserted in the coupling 12. The periphery of the rearward portion 50 is formed with a pair of axially spaced, rearward and forward annular grooves 54 and 56. A pair of diametrically positioned inlet apertures 58 and 60 extend through the wall of the outer pipe 38 in the groove 54, as shown in Figure 3.

Ducts 82 and 84 in the base 62 extend from the bore 72 in the base to a chamber 80. When the rearward portion of the tip is fully inserted in the bore 72, air can flow from the air passage 18 into the chamber 80, through the ducts 82 and 84, into the bore 72, through the apertures 58 and 60, into the air passage 42 and through the tip.

Push buttons 24 and 26 on the top rear surface of the head are coupled to normally closed valves and are selectively hand-operated to discharge water, air, or both through the distal end 28 of the tip 14. A handle 30 can be threaded with the shank 20 to connect water and air supply hoses 32 and 34 to the water and air passages 16 and 18, respectively. When the push buttons 24 and 26 are simultaneously depressed water spray mist is produced.

Since the development of the quick-release syringe tip system just described several improvements have taken place. Central to such improvements is the development of the disposable tip which is retrofittable to the older metal units which must be autoclaved to reuse. Disposable air/water syringe tips resemble bent, plastic straws with multiple cannulations to receive and deliver air and water from existing hand-held units. One leading manufacturer is Crystal Tip of Irvine, CA.

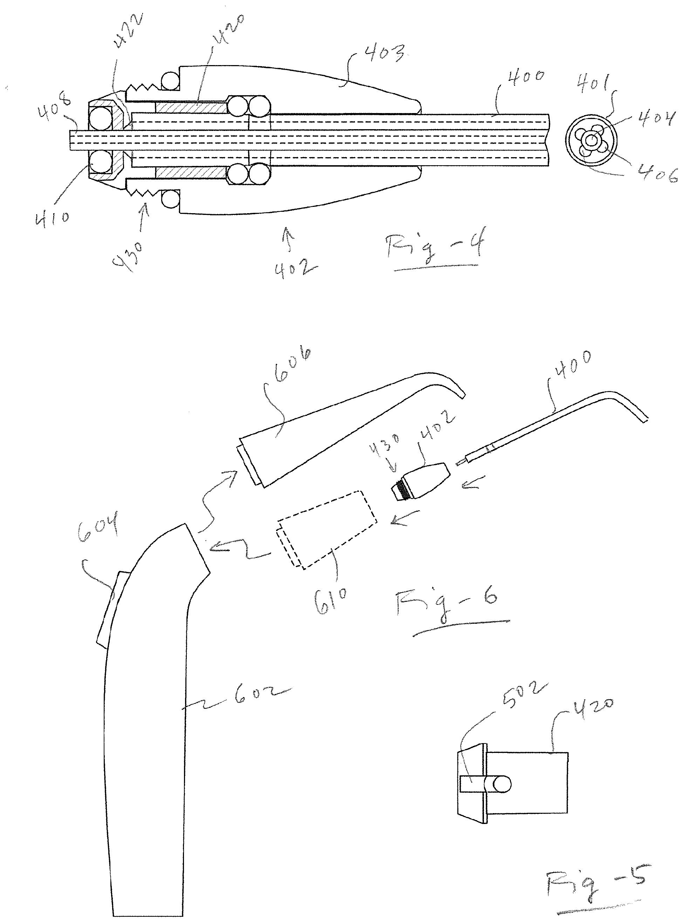

As with the earlier, autoclavable metal syringe tips, the proximal end of the Crystal Tip includes a central, protruding tube to receive water which, like its predecessors, seals against an O-ring in the syringe body. However, as shown in Figure 4, the tip does not have proximal side ducts through which the air flows; rather the proximal end surrounding the water tube does not 'bottom out' within the syringe body, allowing air to enter the cannulations surrounding the central water tube. Crystal Tips are designed to be used directly on common U.S. and Canadian syringes. In particular, Crystal Tips fit syringes from Adec (Newberg, OR), DCI International (Newberg, OR) and Unic/Heka (Ishøj, Denmark) without the need for any so-called adapter units.

Currently in Europe, however, most syringes use autoclavable tips. As a result, there has been little attempt to upgrade to new standards that have been in place for years. As such, disposable tips, including Crystal Tips, cannot be used directly on any European syringe. Syringes with autoclavable tips use a variety of routing patterns to deliver air and water to the tip. However, all U.S. disposable tips receive their air flow through the base of the tip that is inserted into the syringe. Autoclavable tips route air flow through a side port (hole) directly below an O-ring grove on the metal tip. As such, without some type of conversion, disposable tips are incompatible with European-style syringes that use autoclavable tips.

Given that there are numerous proprietary designs outside North America, it would be advantageous to provide these syringes with appropriate adapter kits enabling them to utilize standard, disposable quick-release air/water tips.

US 5 192 206 A discloses an adapter kit enabling a disposable tip to connect to a dental syringe that supplies air and water through separate air and water ports, the tip having a central, water-carrying tube surrounded by a plurality of air-carrying channels, the tip having a proximal base surface with openings to the air-carrying channels, with the water tube extending outwardly from the base surface, the kit comprising: a cap subassembly including a cap body with a distal opening into which the proximal end of the elongated disposable tip is inserted; and an adapter subassembly having a proximal end configured for connection to the syringe body and a distal end configured for coupling to the cap subassembly, the adapter subassembly including an internal structure with a first path for coupling the water port of the syringe to the water-carrying tube of the tip through the cap subassembly, and a second path for coupling the air port of the syringe to the air-carrying channels of the disposable tip through the cap subassembly; a receptacle having a bottom portion cooperating with the proximal base surface of the tip once inserted into the cap subassembly, the receptacle further including an aperture through which the water-carrying tube of the tip extends; wherein a cavity is established between the bottom portion of the receptacle and the base surface of the tip; and wherein the receptacle includes one or more side apertures through which air from the syringe passes into the cavity and into the air-carrying passages of the tip.

### SUMMARY OF THE INVENTION

The invention relates to an adapter kit according to claim 1, enabling a disposable tip to connect to a dental syringe that supplies air and water through separate air and water ports.

The invention also relates to a method according to claim 10, enabling a dental syringe having an existing tip to instead receive a disposable tip having a central, water-carrying tube surrounded by a plurality of air-carrying channels.

### BRIEF DESCRIPTION OF THE DRAWINGS

FIGURE 1 is an exploded isometric view of a prior art dental syringe showing its quick-release tip withdrawn;
FIGURE 2 is an enlarged side elevational view of the dental syringe of Figure 1 with portions broken away;
FIGURE 3 is a sectional view taken along line 3--3 of Figure 2;
FIGURE 4 is a drawing in partial cross section showing an adapter body and disposable tip applicable to the invention;
FIGURE 5 is a side view of a typical ferrule constructed in accordance with the invention, showing side grooves configured for the passage of air;
FIGURE 6 is an exploded view illustrating how the invention replaces an autoclavable tip on a generic, European-style with a conversion kit and disposable tip;
FIGURE 7 is a cross section of a quick-release version of the threaded adapter body of Figure 4;
FIGURES 8A-8G illustrate syringe systems to which the invention is applicable that feature stems protruding from the syringe body;
FIGURES 9A-9C illustrate syringe systems to which the invention is applicable that feature threaded connections between the syringe body and the tip which is removed;
FIGURES 10A-10F illustrate syringe systems to which the invention is applicable that feature stems protruding from the removed tip and into the syringe body;
FIGURES 11A-11D illustrate syringe systems to which the invention is applicable that feature tube projections from the removed tip and into the syringe body;
FIGURE 12 is a cross section of a Castellini syringe body and a conversion kit enabling the syringe to accept disposable tips;
FIGURE 13 is a cross section of a Cefla F3 LUZ syringe body and a conversion kit enabling the syringe to accept disposable tips;
FIGURE 14 is a cross section of a Cefla F6 Anthos syringe body and a conversion kit enabling the syringe to accept disposable tips;
FIGURE 15 is a cross section of a Chirana syringe body and a conversion kit enabling the syringe to accept disposable tips;
FIGURE 16 is a cross section of a Faro SM03 syringe body and a conversion kit enabling the syringe to accept disposable tips;
FIGURE 17 is a cross section of a Faro SYR syringe body and a conversion kit enabling the syringe to accept disposable tips;
FIGURE 18 is a cross section of a Kavo 1056 syringe body and a conversion kit enabling the syringe to accept disposable tips;
FIGURE 19 is a cross section of a Kavo 1056S syringe body and a conversion kit enabling the syringe to accept disposable tips;
FIGURE 20 is a cross section of a Kavo 6F syringe body and a conversion kit enabling the syringe to accept disposable tips;
FIGURE 21 is a cross section of a Kavo Systematica (with light) syringe body and a conversion kit enabling the syringe to accept disposable tips;
FIGURE 22 is a cross section of a Kavo Systematica (without light) syringe body and a conversion kit enabling the syringe to accept disposable tips;
FIGURE 23 is a cross section of a Kavo K4 syringe body and a conversion kit enabling the syringe to accept disposable tips;
FIGURE 24 is a cross section of a Kavo Esthetica syringe body and a conversion kit enabling the syringe to accept disposable tips;
FIGURE 25 is a cross section of a Sirona 4000 syringe body and a conversion kit enabling the syringe to accept disposable tips;
FIGURE 26 is a cross section of a Sirona C8 Teneo syringe body and a conversion kit enabling the syringe to accept disposable tips;
FIGURE 27 is a cross section of a Ritter Topjet syringe body and a conversion kit enabling the syringe to accept disposable tips;
FIGURE 28 is a cross section of a Luzzani Mini Assistant syringe body and a conversion kit enabling the syringe to accept disposable tips;
FIGURE 29 is a cross section of a Luzzani Mini Mate syringe body and a conversion kit enabling the syringe to accept disposable tips;
FIGURE 30 is a cross section of a Luzzani Mini Light syringe body and a conversion kit enabling the syringe to accept disposable tips;
FIGURE 31 is a cross section of a Luzzani Mini Brite syringe body and a conversion kit enabling the syringe to accept disposable tips;
FIGURE 32 is a cross section of a Morita WS66 syringe body and a conversion kit enabling the syringe to accept disposable tips;
FIGURE 33 is a cross section of a Morita WS97 syringe body and a conversion kit enabling the syringe to accept disposable tips;
FIGURE 34 is a cross section of a Morita W10 yringe body and a conversion kit enabling the syringe to accept disposable tips;
FIGURE 35 is a cross section of a Morita WS12 syringe body and a conversion kit enabling the syringe to accept disposable tips;
FIGURE 36 is an exploded view of a Takara Belmont syringe body and a conversion kit enabling the syringe to accept disposable tips;
FIGURE 37 is a cross section of an Osada MSF syringe body and a conversion kit enabling the syringe to accept disposable tips; and
FIGURE 38 is a cross section of a Tridac syringe body and a conversion kit enabling the syringe to accept disposable tips.

### DETAILED DESCRIPTION OF THE INVENTION

This invention improves upon existing air/water syringe instrumentation by providing adapter units that enable replaceable, disposable tips to be used with various syringe assemblies, including European-style syringes. To accomplish this goal, the invention provides two subassemblies; first, a cap subassembly that receives the disposable tip, and an adapter subassembly that couples the cap with the tip to the syringe body after the non-disposable or autoclavable tip has been removed.

Figure 4 is a drawing in partial cross section which illustrates a cap subassembly applicable to the invention. The disposable tip is shown at 400, and 401 is and end view showing the central water-carrying tube 404 surrounded by air-carrying channels 406. In the tip shown, a Crystal Tip from Westside Resources of Irvine, CA, the water tube protrudes form the proximal end of the tip at 408, facilitating an additional O-ring seal at 410 for enhanced air/water separation. However, the invention is also applicable to disposable tips with flush air/water passages opposing flat proximal and distal ends. Nor is the invention limited in terms of the number of air-carrying channels surrounding the central water-carrying tube.

Continuing the reference to Figure 4, the cap subassembly 402 includes an outer body 403 with a distal end to receive the tip 400 and a proximal end configured to receive a ferrule 420. The ferrule includes a cup-shaped receptacle that receives the proximal end of the disposable tip once inserted into the cap body 403. In the configuration shown, the proximal end of the tip includes a tapered region to ensure that the tip end does not "bottom out" against the bottom of the ferrule cup. This allows air to flow through side grooves 502 shown in Figure 5 and into the air-carrying channels 406 of the tip. Again, however, as long as access to the air-carrying channels is provided, such a tapered region is not necessarily required.

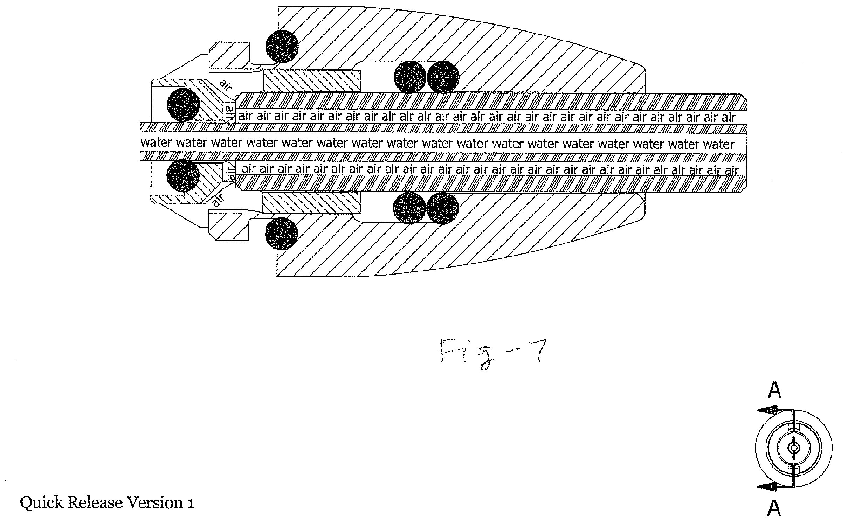

Figure 6 is a simplified drawing showing a generic syringe body 602 with air/water control buttons 604. The figure also shows a generic autoclavable tip 606 which is removed from the body 602 and replaced with a cap body 402 receiving disposable tip 400. A generic adapter subassembly is shown at 610 which not only couples the cap subassembly to the syringe body, but also includes appropriate passageways necessary to ensure that air and water supplied by the syringe find their ways to the respective air and water channels of the disposable tip. Note that the cap subassembly may include a threaded connector 430 or, alternatively, may utilize a quick release connection of the type depicted in Figure 7. Figure 7 also illustrates air and water flow which would be the same in Figure 4.

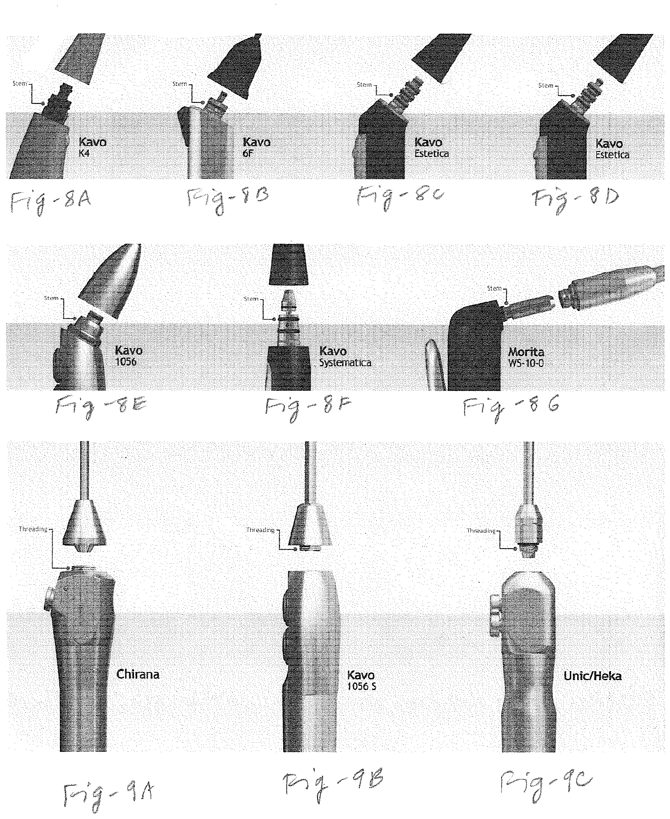

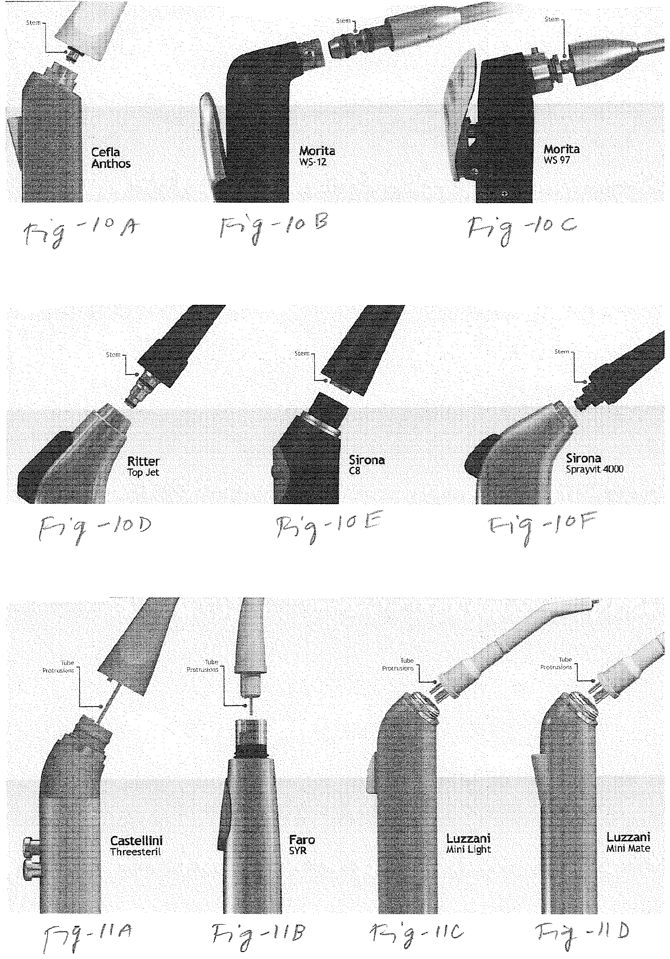

The adapter subassemblies of the invention span a range of parts and complexity depending upon the type of syringe and the tip being replaced. That said, the invention accommodates all current styles and may be extended to yet-to-be developed designs with appropriate engineering modification. In particular, the invention includes adapter subassemblies to accommodate syringe systems with stems that protrude from the syringe body, as exemplified in Figures 8A-8G; syringe systems that feature threaded connections between the syringe body and the tip without any prominent protrusions, as depicted in Figures 9A-9C; syringe systems with stems protruding from the removed tip, as shown in Figures 10A-10F; and syringe systems that feature tube projections from the removed tip, as shown in Figures 11A-11D.

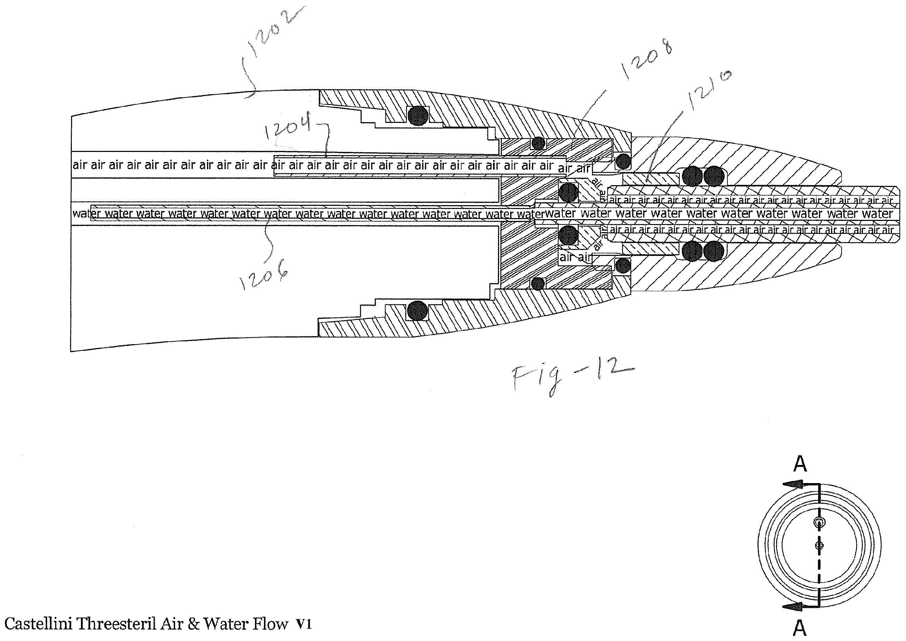

Figures 12 to 38 are detailed cross-sectional drawings that show particular adapter subassemblies and, in some cases, modified ferrules depending upon the design requirements. In these drawings, the existing syringe body is shown without cross-hatching, whereas the cap and adapter subassemblies are cross-hatched. Air and water flows are also illustrated with text in each cross section. All conversion kits further include multiple O-rings, depicted as black circles. In terms of materials, the ferrules are preferably constructed of a brass alloy to achieve demanding tolerances, whereas the other hard components may be constructed of aluminum or hard plastic. Although conversion kits having three or more components in addition to the O-rings, those of skill in the art will recognize that fewer pieces may be used through appropriate machining. For example, the ferrule and end cap may be formed of an integral unit by machining a single piece of brass or aluminum. While such fabrication may complicate the manufacturing process somewhat, the end result eliminates O-rings and simplifies assembly by the user.

While Figures 12 to 38 are well-understood and apparent to those of skill, comments will be made about incidental features and structures.

Figure 12 is a cross section of a Castellini syringe body and conversion kit. Note in this case that since the syringe body 1202 expected to receive elongated air/water tubes from the removed tip, they are provided at 1204, 1206. The adapter subassembly 1201 also includes a component 1208 between the syringe body 1202 and ferrule 1210 coupled to the back of cap subassembly 1200.

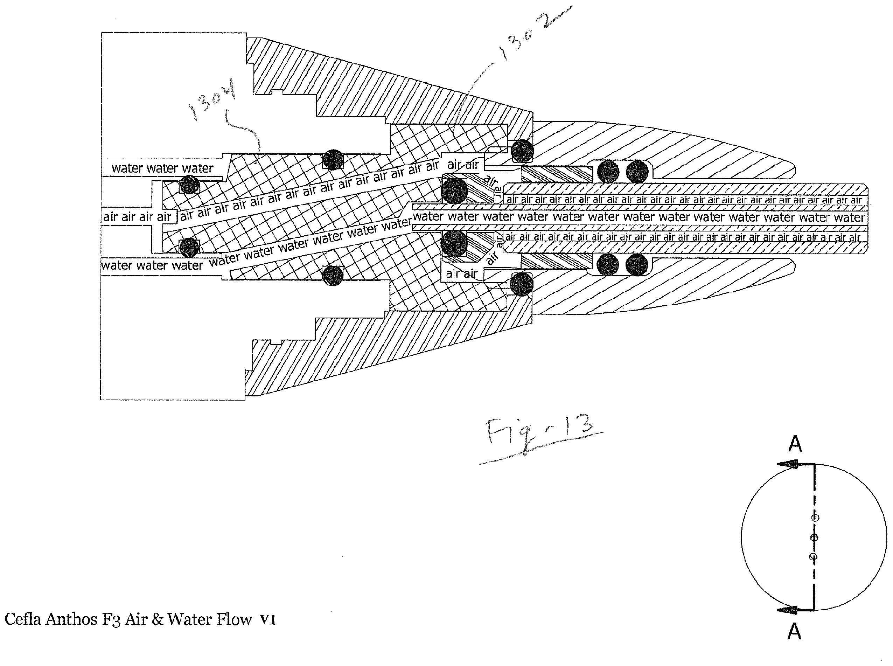

The Cefla F3 LUZ syringe body and conversion kit of Figure 13 includes an intermediate component 1302 in the adapter subassembly 1301 with slanted air/water channels and a stem 1304 that fits into the syringe body to replace the stem on the removed autoclavable tip. The cap subassembly is depicted at 1300.

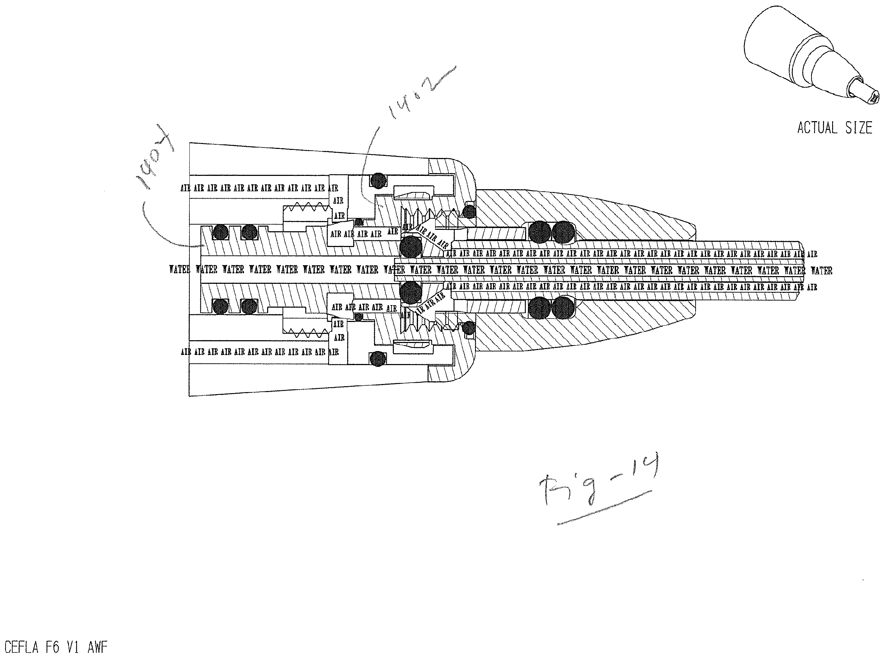

Figure 14 is a cross section of a Cefla F6 Anthos syringe body and a conversion kit which also includes a component 1402 in adapter subassembly 1401 providing a stem 1404 into the body of the syringe. The cap subassembly is shown at 1400.

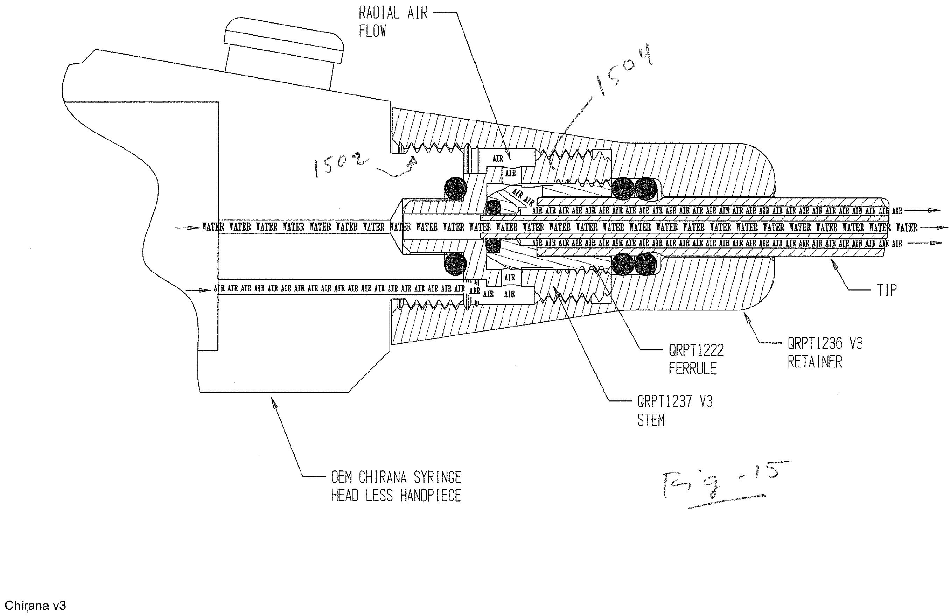

The Chirana syringe body and conversion kit of Figure 15 provides an anticipated threaded connection at 1502 with no prominent protrusions as with the tip being replaced. The radial air flow in this case is guided to the ferrule through a component 1504 forming part of the adapter subassembly. Note that in this case the cap subassembly 1500 extends all the way to the syringe body.

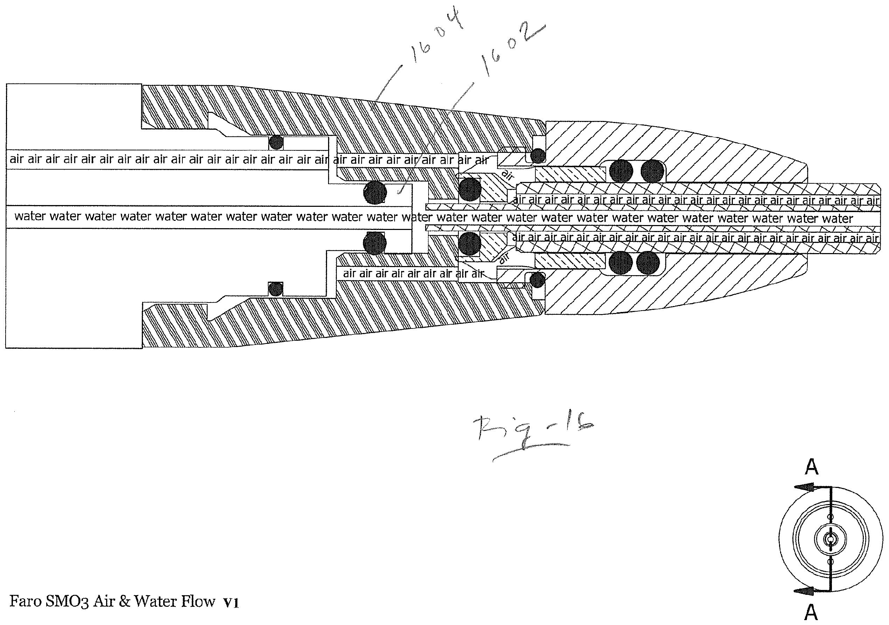

The Faro SM03 syringe body of Figure 16 qualifies as a stem (1602) on the syringe system. Air is brought in from the side through adapter subassembly 1604. The cap subassembly is shown at 1600.

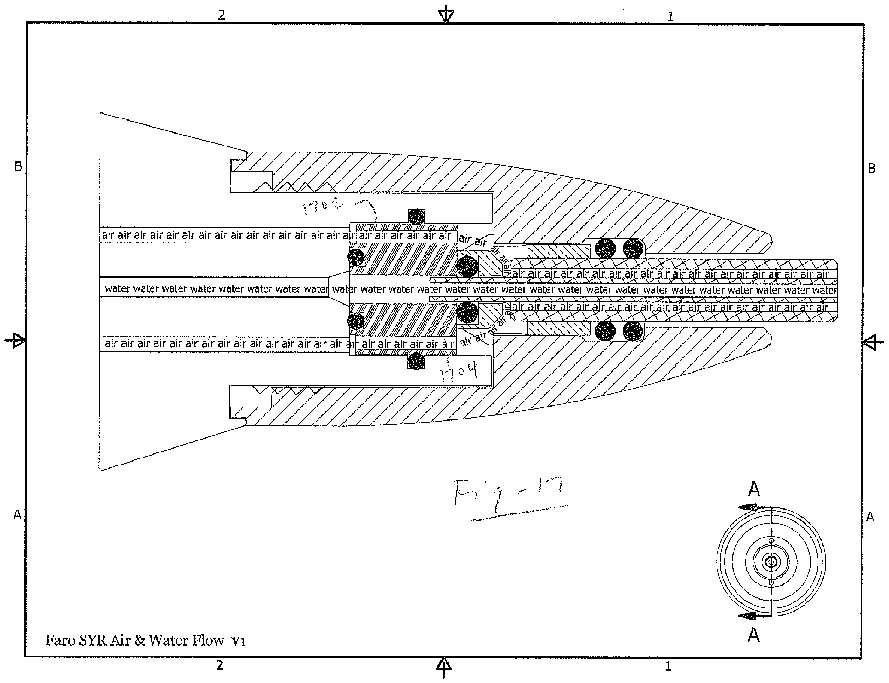

Figure 17 is a cross section of a Faro SYR syringe body and a conversion kit. Although the replaced tip included an extension tube, 1702 of the adapter subassembly allows the extension 1704 of the tip itself to be used instead. The cap subassembly, shown at 1600, extends all the way to the syringe body 1701.

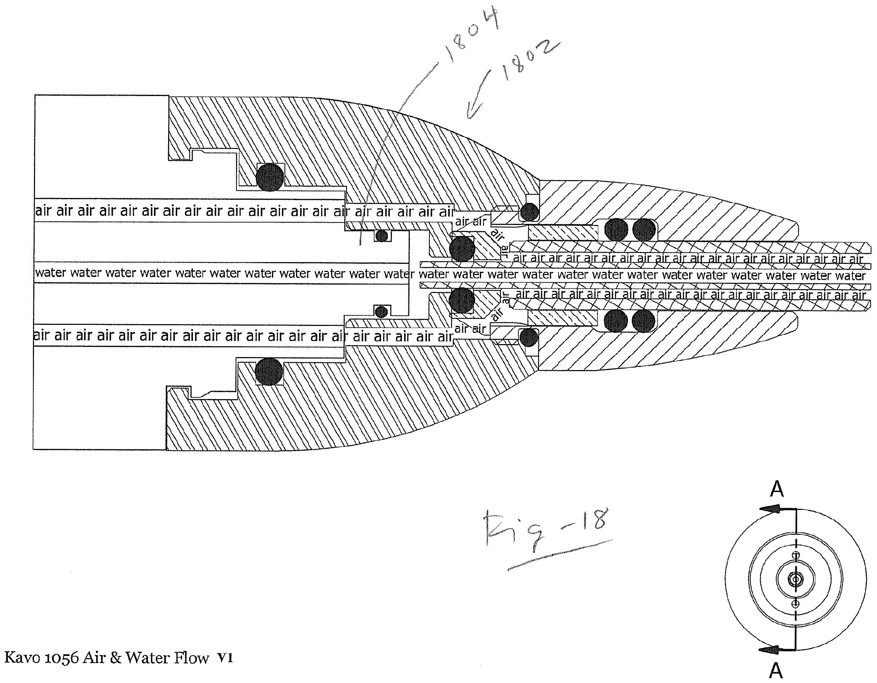

Figure 18 is a cross section of a Kavo 1056 syringe body and a conversion kit. In this case the adapter subassembly 1802 includes two side passages for air flow to the ferrule and tip. The adapter subassembly 1802 is also configured to receive the stem 1804 on the syringe body. The cap subassembly is shown at 1800.

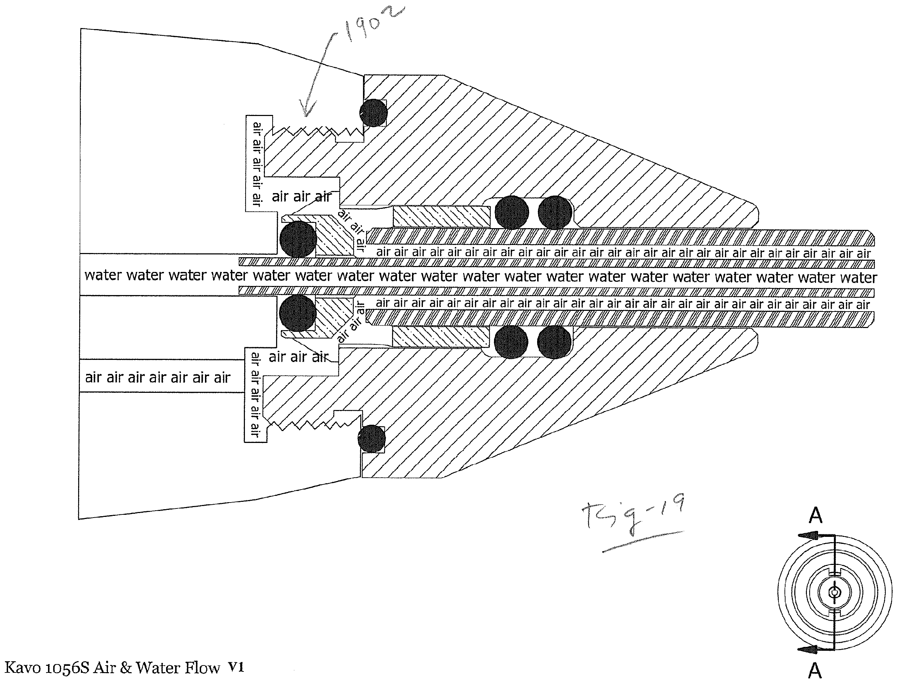

Figure 19 is a cross section of a Kavo 1056S syringe body and a conversion kit. This includes a threaded connection 1902 without any prominent protrusions or tubes. The cap and adapter subassemblies are combined in this design at 1900. The ferrule is depicted at 1901.

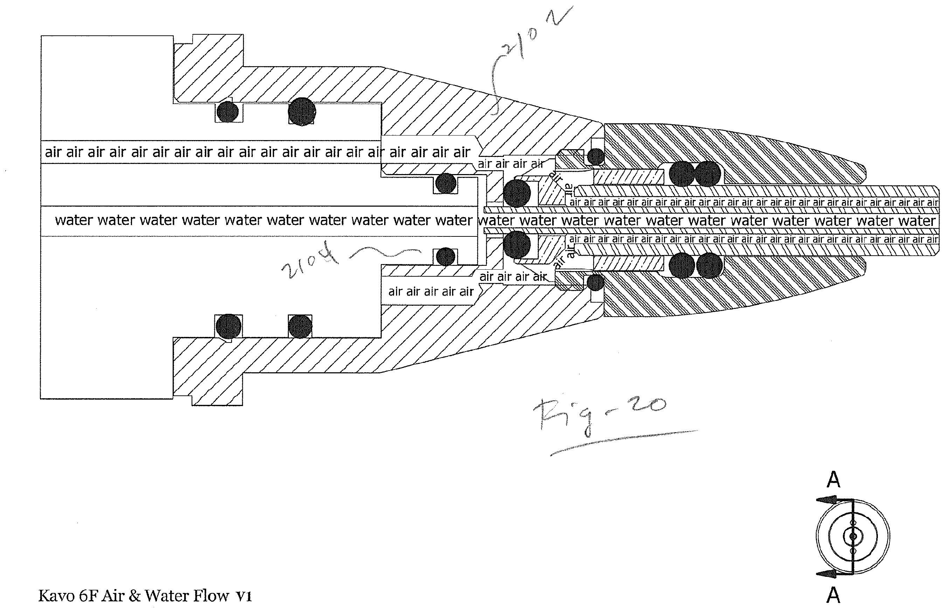

The Kavo 6F syringe body of Figure 20 also includes a stem 2104 received by the adapter subassembly 2102. The cap subassembly is shown at 2100.

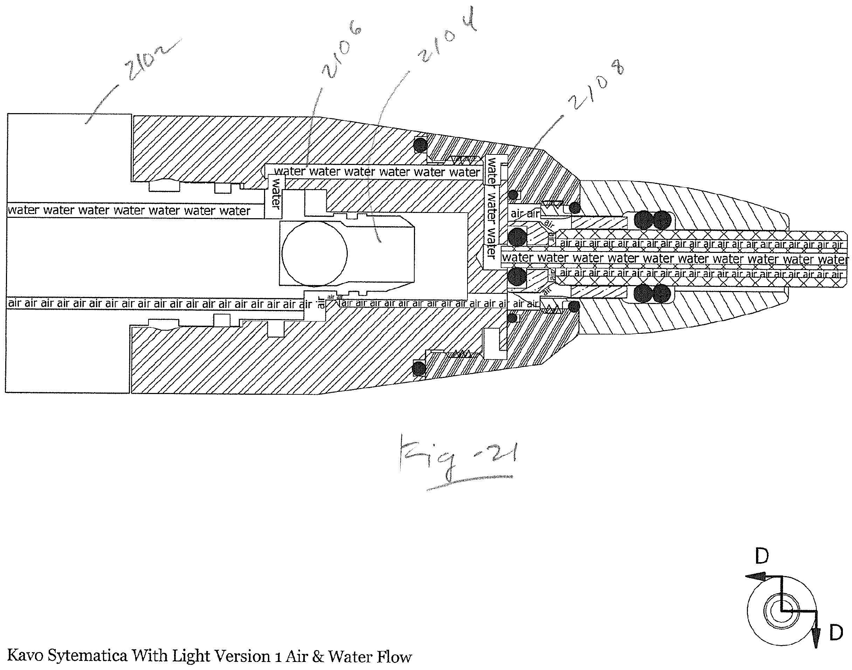

Figure 21 is a cross section of a Kavo Systematica (with light) syringe body and the conversion kit for that unit, which includes an adapter subassembly 2101 with a receptacle to receive the stem 2104 on the syringe body 2102. In this case, the water line 2106 is offset, but intermediate component 2108 of the adapter subassembly directs the water flow to the base of the ferrule and disposable tip. The cap subassembly is shown at 2100.

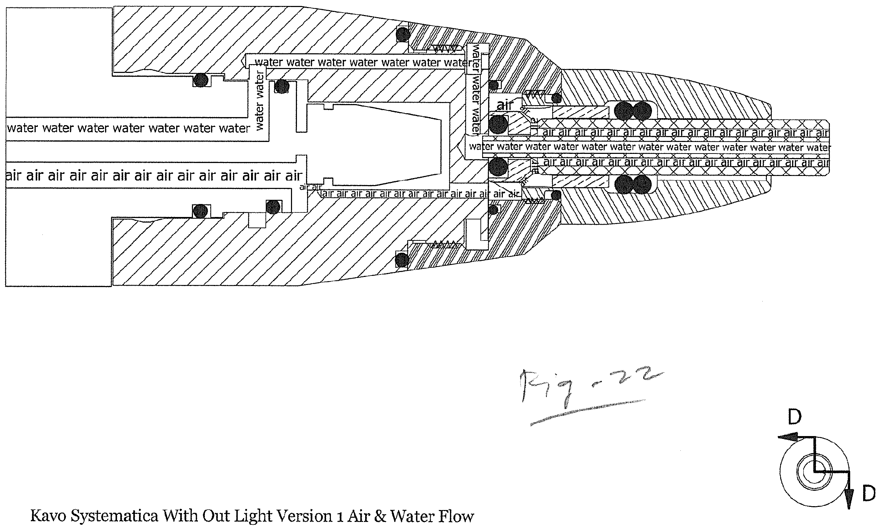

The Kavo Systematica (without light) syringe body of Figure 22 is quite similar to the lighted version, as is the conversion kit. The adapter subassembly is shown at 2201 and the cap subassembly is shown at 2200.

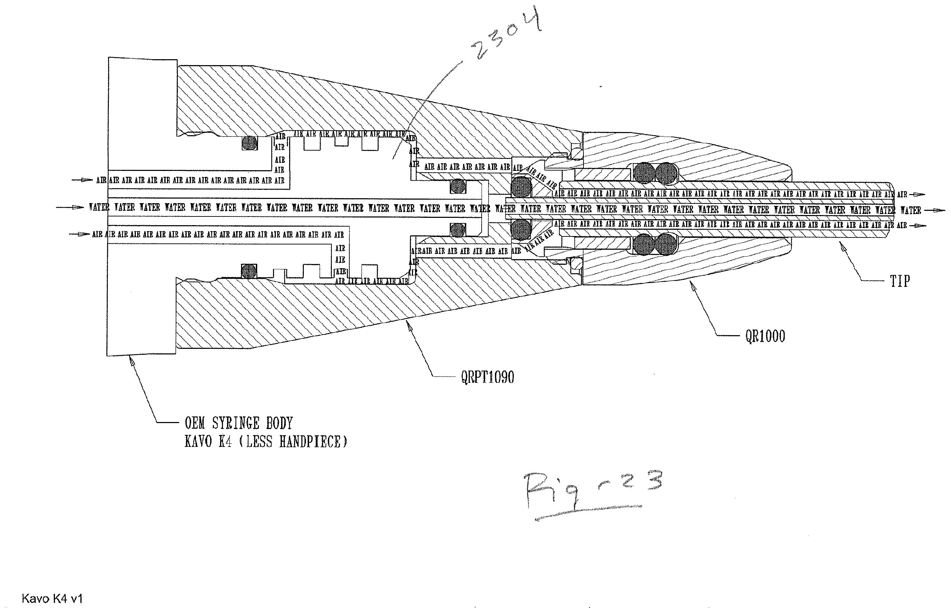

Figure 23 illustrates a conversion kit applicable to the Kavo K4 syringe. Note that in this and other embodiments of the invention, not all of the o-rings provided on the stem 2304 of the syringe are replaced once removed to receive the adapter and cap subassemblies. The adapter subassembly is shown at 2301 and the cap subassembly is shown at 2300.

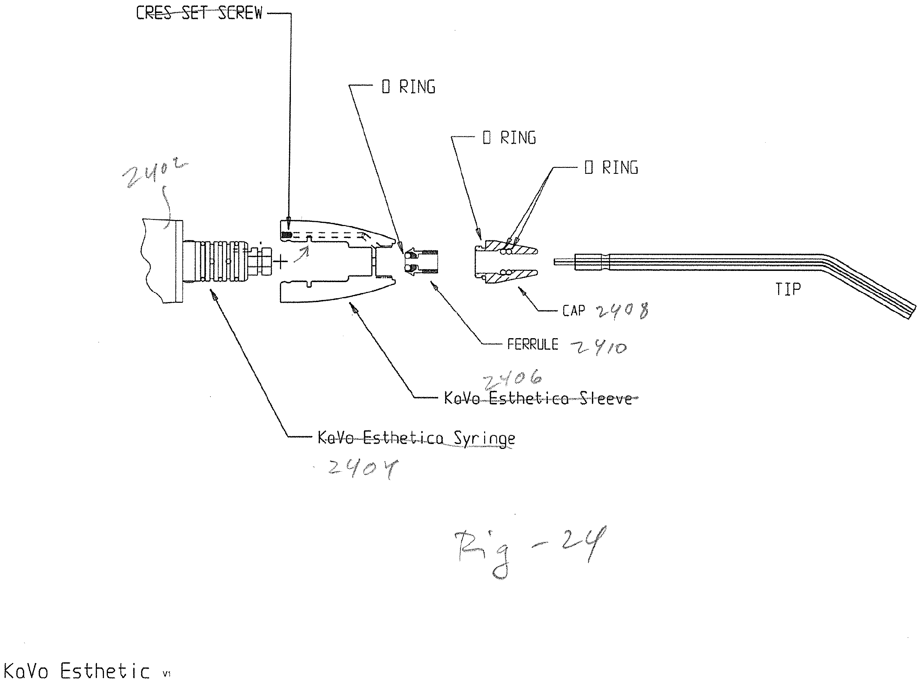

The Kavo Esthetica syringe body shown in Figure 24 includes an elongated stem 2404 on the syringe body 2402, with air flowing out the side of the stem and into adapter subassembly 2406. Cap subassembly 2408 and ferrule 2410 cooperate to guide air and water to their respective destinations and shown in the Figure.

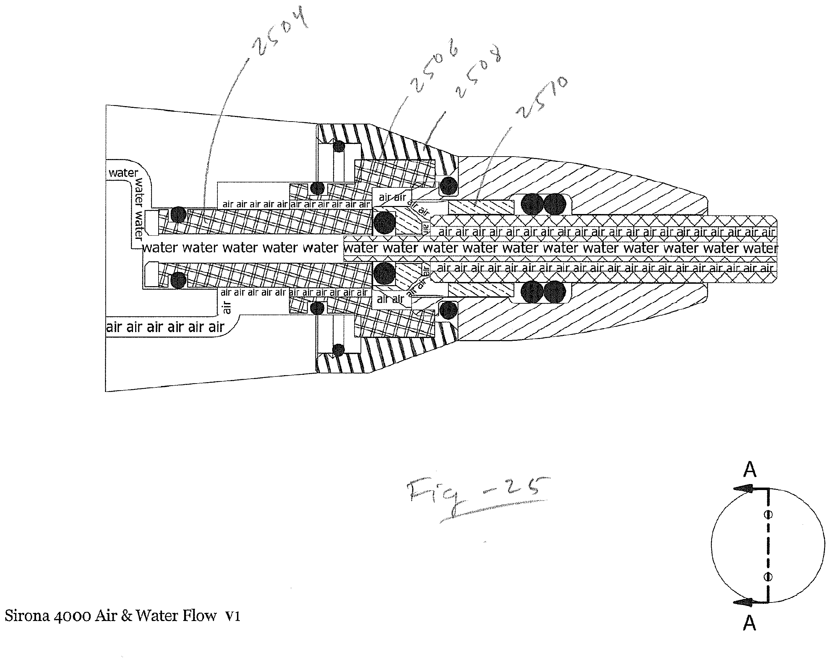

The Sirona 4000 is one of the stem-on-tip configurations. As shown in Figure 25, multiple components 2504, 2506, 2508, 2510 in the adapted subassembly 2501 cooperate in this somewhat complex solution to air and water flow. The cap subassembly is depicted at 2500.

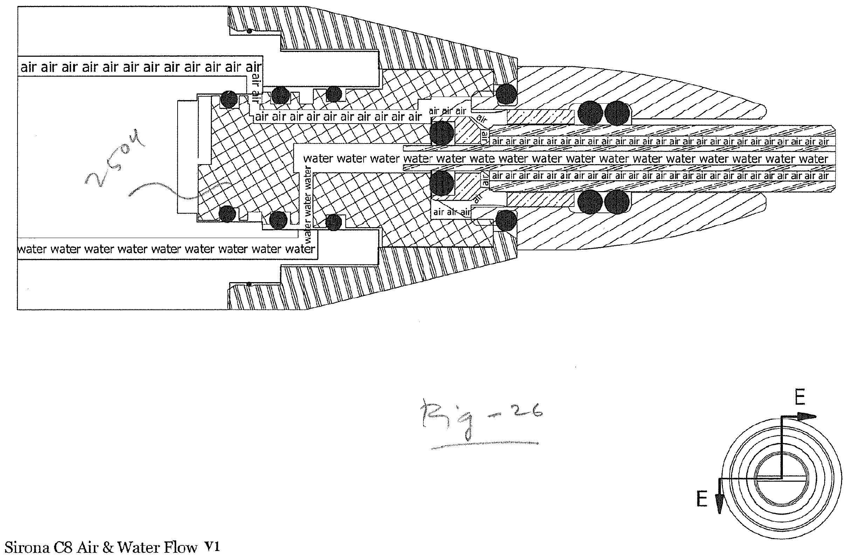

The Sirona C8 system of Figure 26 is somewhat similar to the 4000 system of Figure 25, with one exception being that both air and water are brought in through the sides of the stem 2504, as with the autoclavable tip that was replaced. The adapter subassembly is shown at 2601, and the cap subassembly at 2600.

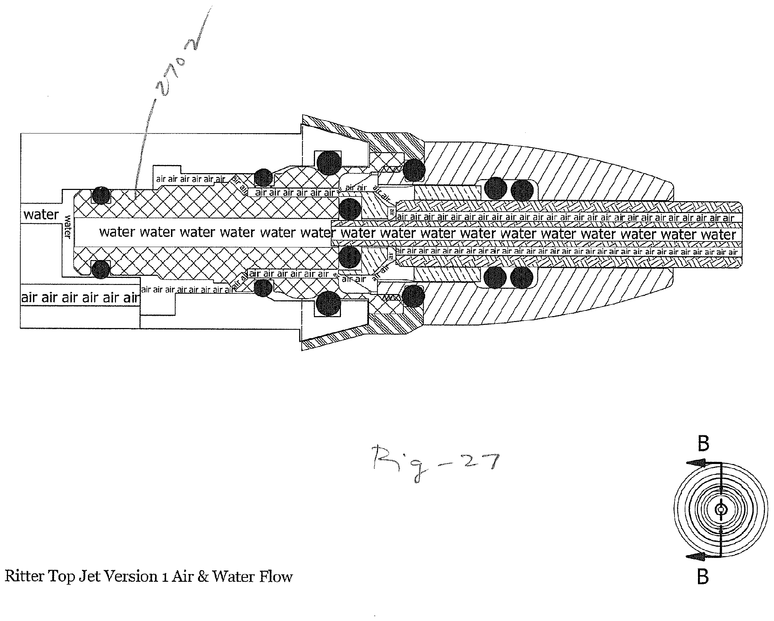

Figure 27 is a cross section of a Ritter Topjet syringe body and a conversion kit, which includes an adapter subassembly with a somewhat elongated stem 2702 on the adapter subassembly 2701 to match the stem of the tip being replaced. Multiple components and O-rings are required, particularly with directing the air flow. The cap subassembly is called out at 2700.

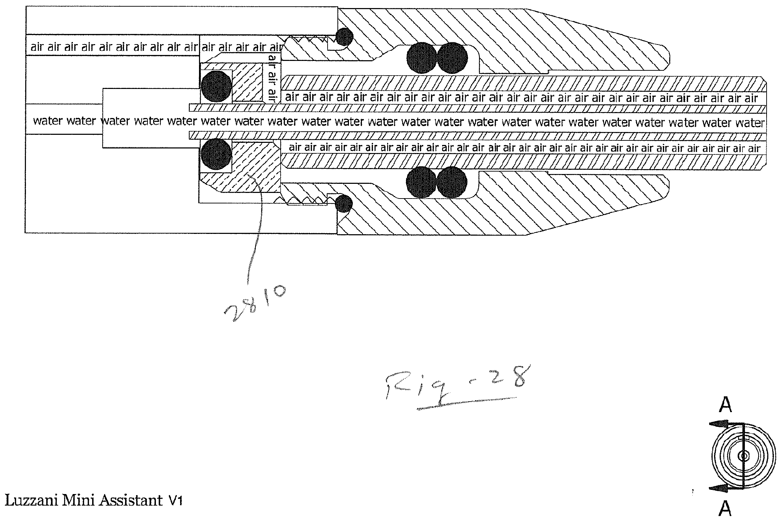

Luzzani Mini Assistant syringe body and conversion kit of Figure 28 is quite simple, with component 2810 comprising the adapted subassembly. The cap subassembly is shown at 2800. Note that this is a ferrule-less design.

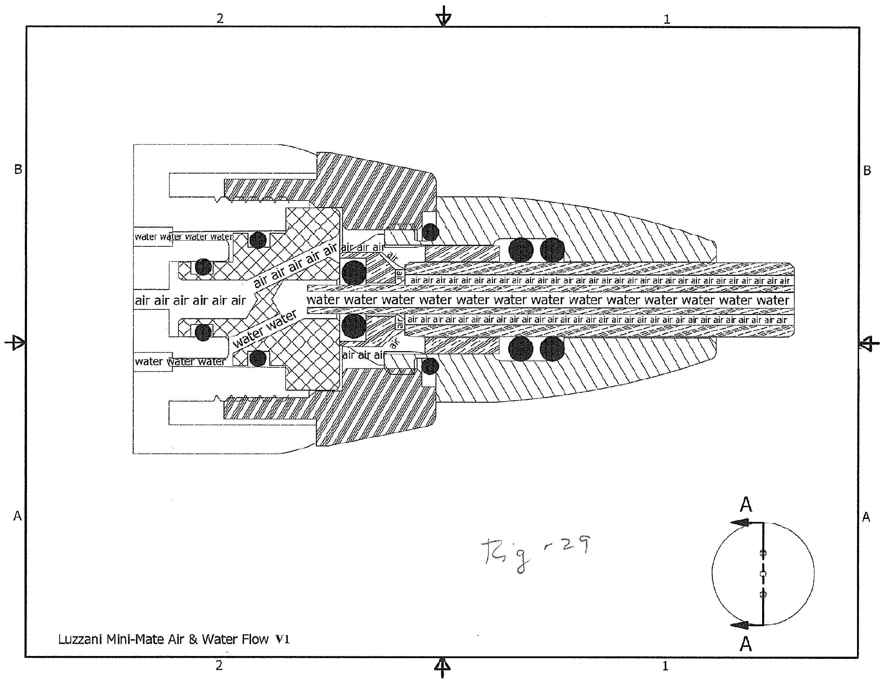

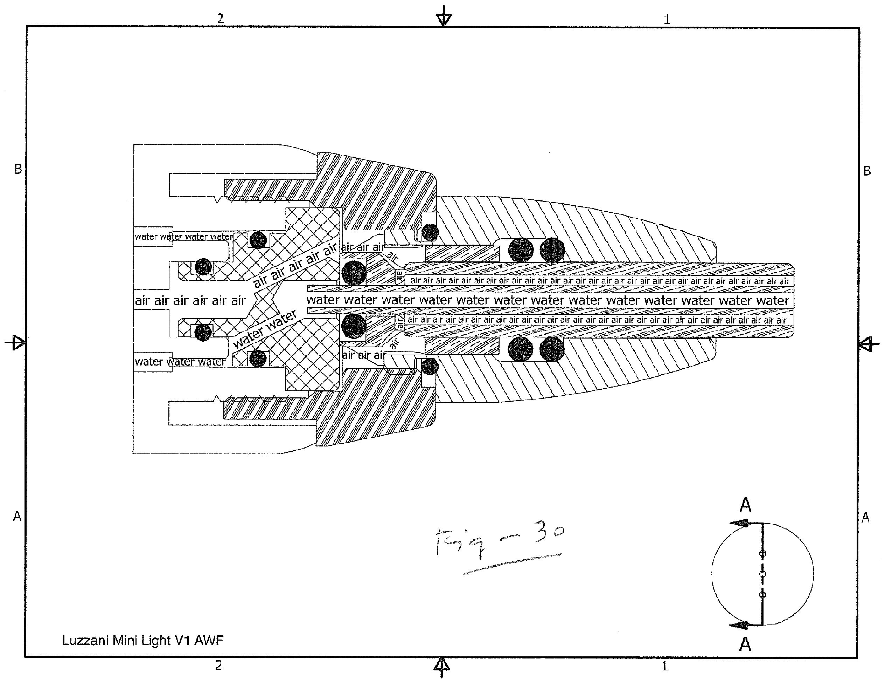

Figure 29 is directed to the Luzzani Mini Mate syringe body and Figure 30 is directed to the Luzzani Mini Light syringe body with associated conversion kit. The Luzzani Mini Light is very similar to the Mini Mate except that the Mini Light includes a light source. In this case, at least a portion of the disposable tip is constructed form a plastic such as Lucite which acts as a light pipe to conduct the illumination from the distal tip of the optical fiber to the distal end of the tip. According to the invention, to retain the illumination feature, the adapter subassembly includes along its length an optical fiber to conduct the illumination from the distal tip of the optical fiber to a light-emitting port disposed on the side of the adapter unit. The adapter subassembies are shown at 2901, 3001 and the cap subassemblies at 2900, 3000.

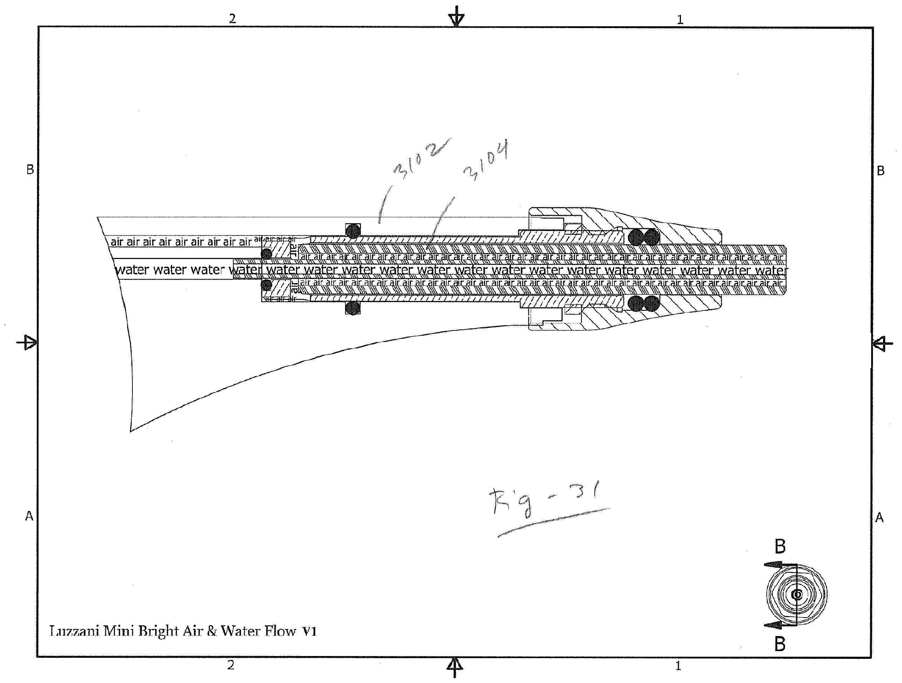

Figure 31 is a cross section of a Luzzani Mini Brite syringe body and conversion kit, which includes an adapter subassembly with an elongated stem 3104 that extends deep into the syringe body 3102. The cap subassembly is shown at 3100, and the cap subassembly, at 3101, amounts to an elongated ferrule.

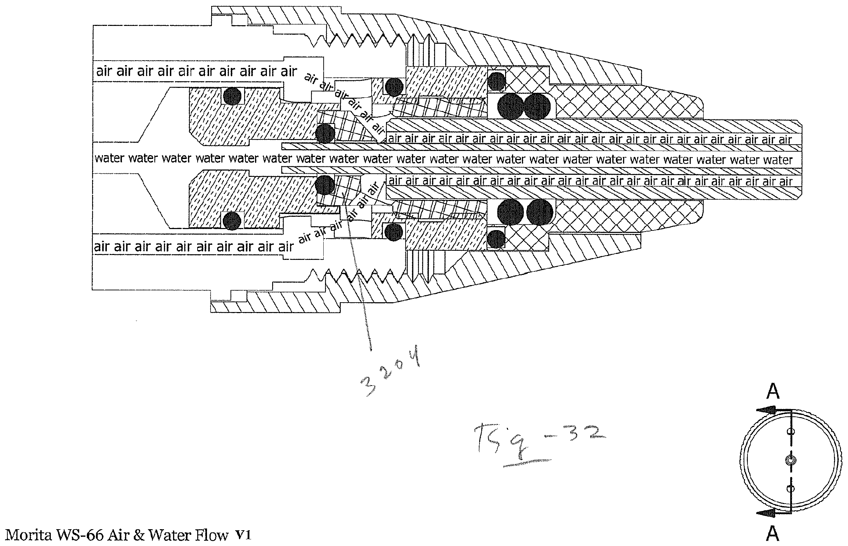

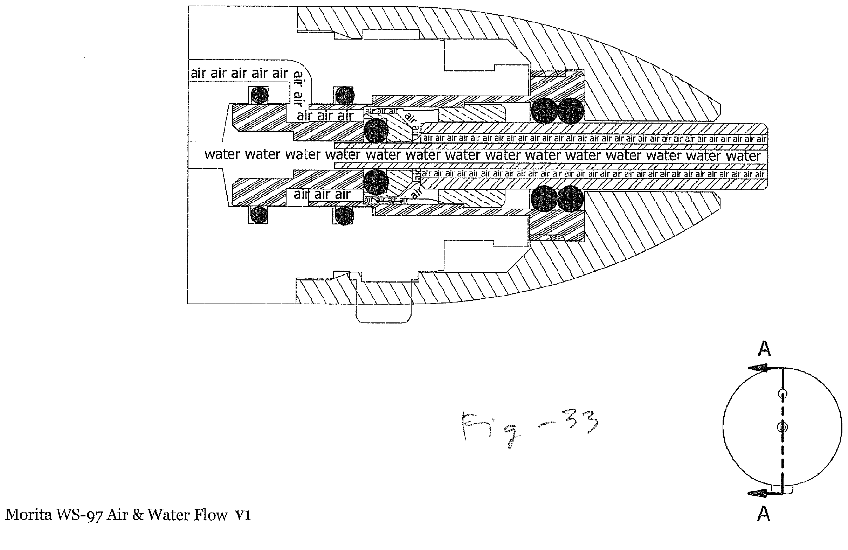

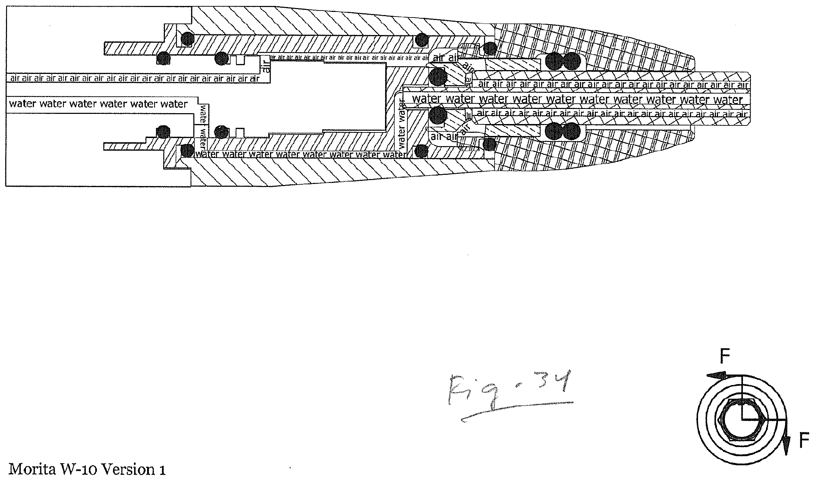

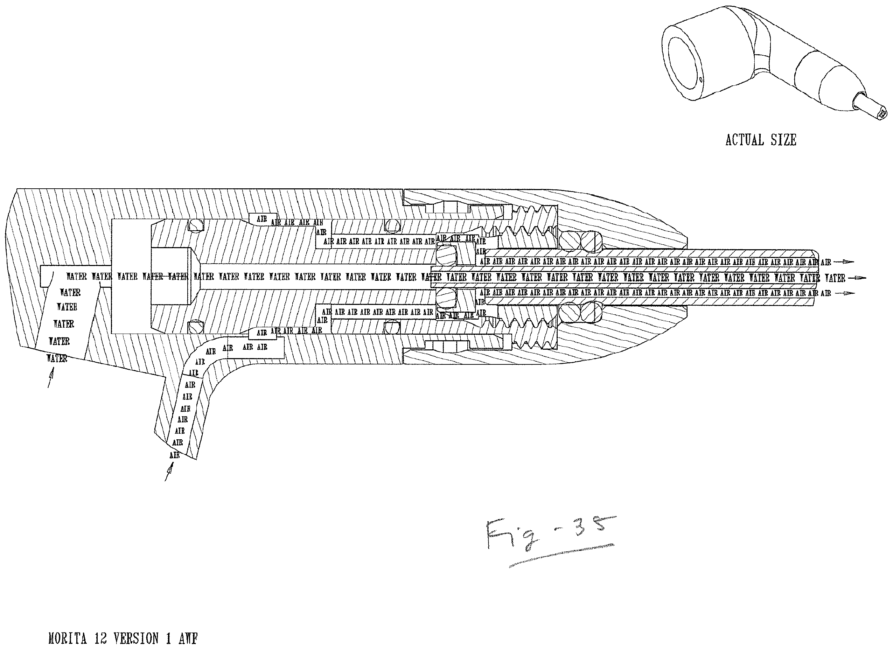

Figures 32 to 35 reside in conversion kits for Mortia syringes. Figure 32 concerns the Morita WS66; Figure 33, the Morita WS97; Figure 34, the Morita W10, and Figure 35, the Morita Model 12. All of the conversion kits are quite complex, requiring multiple components and o-rings in the adapter subassemblies. Indeed, most of the designs require modified ferrules, some without a cup-shaped receptacle. The Morita 12 includes the entire upper portion of what would otherwise considered to be the syringe body.

In Figure 32, the cap subassembly is shown at 3200, and the adapted subassembly is shown at 3201. In Figure 33, the cap subassembly is shown at 3300, and the adapted subassembly is shown at 3301. In Figure 34, the cap subassembly is shown at 3400, and the adapted subassembly is shown at 3401. In Figure 35, the cap subassembly is shown at 3500, and the adapted subassembly is shown at 3501.

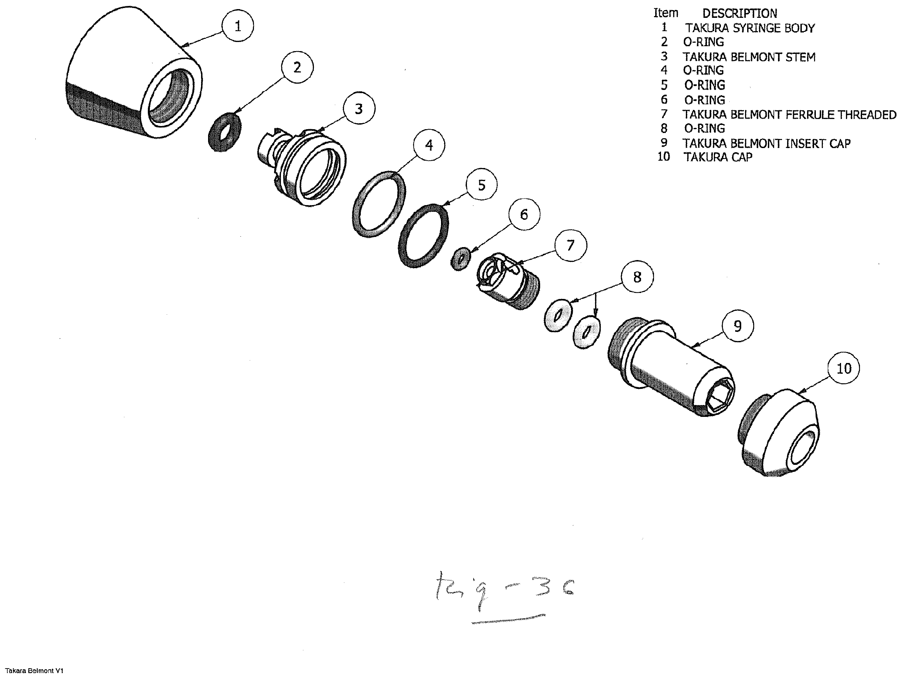

Figure 36 is an exploded view of a Takara Belmont syringe body and conversion kit. In addition to the associated o-rings, the cap subassembly in this case includes items 9, 10, and the adapter subassembly includes component 3. The ferrule, threaded in this case, is shown at 7.

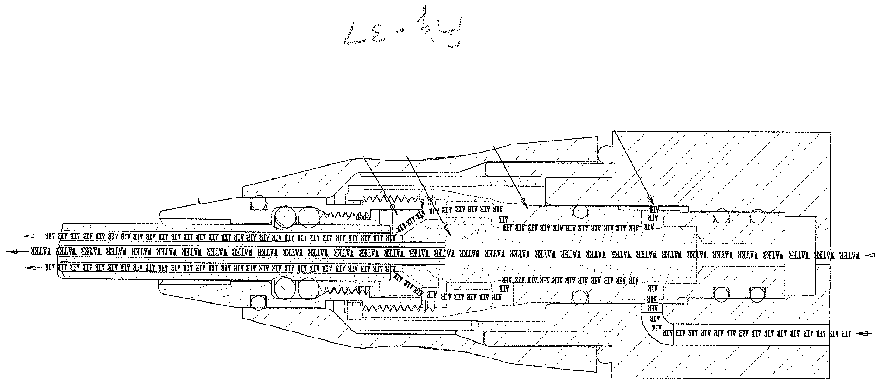

Figure 37 is an exploded view of an Osada MSF syringe body and a conversion kit. Although quite different in overall design, both adapter subassemblies incorporate multiple components and threaded ferrules. The syringe body in Figure 3702 is cross-hatched in this illustration. The adapter subassembly 3701 includes a stem with o-rings received by the syringe body. The cap subassembly 3700 is actually received by the adapter subassembly in this instance.

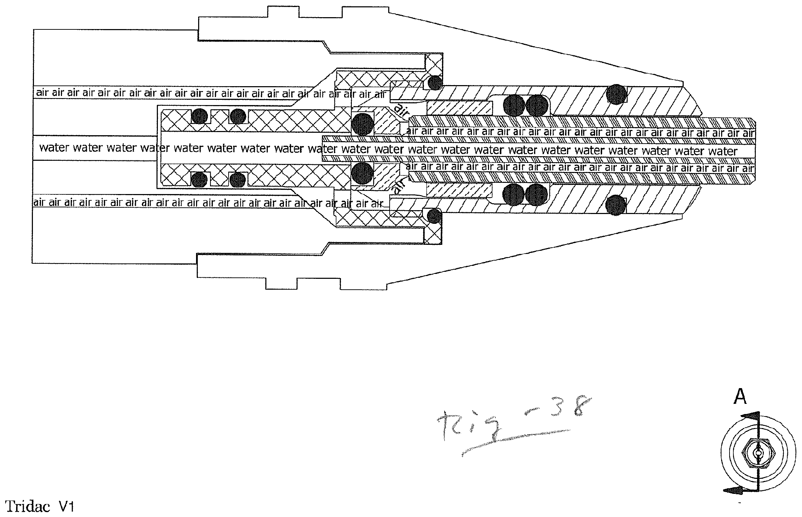

Figure 38 is a cross section of a Tridac syringe body and a conversion kit enabling the syringe to accept disposable tips. The cap subassembly 3800 includes and outer cap body 3802 that is not cross-hatched. The adapted subassembly includes a stem 3801 that is received by the syringe body 3804.

## Claims

1. An adapter kit enabling a disposable tip (400) to connect to a dental syringe that supplies air and water through separate air and water ports, the adapter kit including the disposable tip having a central, water-carrying tube (404) surrounded by a plurality of air-carrying channels (406), the tip (400) having a proximal base surface with openings to the air-carrying channels (406), with the water-carrying tube (404) extending outwardly from the base surface, the kit comprising:
a cap subassembly including a cap body (402) with a distal opening into which the proximal end of the elongated disposable tip (400) is inserted; and
an adapter subassembly (610) having a proximal end configured for connection to the syringe body and a distal end configured for coupling to the cap subassembly, the adapter subassembly (610) including an internal structure with a first path for coupling the water port of the syringe to the water-carrying tube (404) of the tip (400) through the cap subassembly, and a second path for coupling the air port of the syringe to the air-carrying channels (406) of the disposable tip (400) through the cap subassembly, the adapter subassembly (610) further including along its length an optical fiber to conduct illumination from a distal tip of an optical fiber to a light-emitting port disposed on a side of the adapter subassembly (610); and
a receptacle having a bottom portion cooperating with the proximal base surface of the tip (400) once inserted into the cap subassembly, the receptacle further including an aperture through which the water-carrying tube (404) of the tip (400) extends; wherein a cavity is established between the bottom portion of the receptacle and the base surface of the tip (400); and wherein the receptacle includes one or more side apertures through which air from the syringe passes into the cavity and into the air-carrying channels (406) of the tip (400).

2. The adapter kit of claim 1, wherein the receptacle is a separate component coupled to the cap subassembly.

3. The adapter kit of claim 1, wherein the adapter subassembly includes a proximal receptacle to receive a stem on the syringe body.

4. The adapter kit of claim 1, wherein the adapter subassembly includes a proximal stem (1304, 1404, 1804, 2104) insertable into the syringe body.

5. The adapter kit of claim 1, wherein the adapter subassembly includes one or more proximal air- or water-carrying tubes insertable into the syringe body.

6. The adapter kit of claim 1, wherein the adapter subassembly includes a threaded connection to the syringe body.

7. The adapter kit of claim 1, including a threaded connection between the cap and adapter subassemblies.

8. The adapter kit of claim 1, including a connect/disconnect connection between the cap and adapter subassemblies for connecting and disconnecting the cap and adapter subassemblies from each other.

9. The adapter kit of claim 1, wherein the cap and adapter subassemblies are autoclavable in the absence of the disposable tip.

10. A method enabling a dental syringe having an existing tip to instead receive a disposable tip (400), as defined in one of claims 1-9, having a central, water-carrying tube (404) surrounded by a plurality of air-carrying channels (406), comprises the steps of: removing the existing tip from the syringe;
coupling a conversion assembly to the syringe, the conversion assembly having proximal end adapted for connection to the syringe in place of the existing tip, and a distal end with an opening to receive the proximal end of the disposable tip (400), the conversion assembly including an internal structure with a first path for coupling the water port of the syringe to the water-carrying tube (404) of the disposable tip (400) and a second path for coupling the air port of the syringe to the air-carrying channels (406) of the disposable tip (400); and
inserting the proximal end of the disposable tip (400) into the distal end of the conversion assembly such that water is able to flow from the syringe through the water-carrying tube (404) of the disposable tip (400), and air from the syringe is able to flow from the syringe through the air-carrying channels (406) of the disposable tip (400), the conversion assembly further including a proximal adapter subassembly (610) including along its length an optical fiber to conduct illumination from a distal tip of an optical fiber to a light-emitting port disposed on a side of the conversion assembly.

11. The method of claim 10, wherein the conversion assembly includes the proximal adapter subassembly connected to a separate, distal cap subassembly.

12. The method of claim 10, including the step of providing a conversion assembly with a proximal receptacle to receive a stem on the syringe.

13. The method of claim 10, including the step of providing a conversion assembly with a proximal stem insertable into the syringe.

14. The method of claim 10, including the step of providing a conversion assembly with one or more proximal air- or water-carrying tubes insertable into the syringe.

15. The method of claim 10, including the step of providing a conversion assembly threaded connection to the syringe.

## Patentansprüche

1. Ein Adapterkit, der den Anschluss einer Einwegspitze (400) an eine zahnärztliche Spritze ermöglicht, die Luft und Wasser über separate Luft- und Wasseranschlüsse zuführt, wobei der Adapterkit die Spitze (400) mit einem zentralen, wasserführenden Rohr (404) umfasst, das von einer Vielzahl von luftführenden Kanälen umgeben ist, wobei die Spitze (400) eine proximale Basisoberfläche mit Öffnungen zu den luftführenden Kanälen aufweist, wobei das wasserführende Rohr (404) von der Basisoberfläche nach außen verläuft, und wobei der Satz umfasst:
eine Kappenbaugruppe, die einen Kappenkörper (402) mit einer distalen Öffnung umfasst, in die das proximale Ende der länglichen Einwegspitze (400) eingesetzt wird; und
eine Adapterbaugruppe (610) mit einem proximalen Ende, das für die Verbindung mit dem Spritzenkörper konfiguriert ist, und einem distalen Ende, das für die Kopplung mit der Kappenbaugruppe konfiguriert ist,
wobei die Adapterbaugruppe (610) eine interne Struktur mit einem ersten Pfad zum Koppeln des Wasseranschlusses der Spritze mit dem wasserführenden Rohr (404) der Spitze (400) durch die Kappenbaugruppe und einen zweiten Pfad zum Koppeln des Luftanschlusses der Spritze mit den luftführenden Kanälen der Einwegspitze (400) durch die Kappenbaugruppe umfasst , wobei die Adapterbaugruppe (610) außerdem entlang ihrer Länge eine optische Faser umfasst, um Beleuchtung von einer distalen Spitze einer optischen Faser zu einem Licht emittierenden Anschluss zu leiten, der an einer Seite der Adapterbaugruppe (610) angeordnet ist ; und
einen Behälter mit einem Bodenabschnitt, der mit der proximalen Basisfläche der Spitze (400) zusammenwirkt, sobald diese in die Kappenbaugruppe eingesetzt ist, wobei der Behälter außerdem eine Öffnung aufweist, durch die sich das wasserführende Rohr (404) der Spitze (400) erstreckt; wobei zwischen dem Bodenabschnitt des Behälters und der Basisfläche der Spitze (400) ein Hohlraum gebildet ist; und
wobei der Behälter eine oder mehrere seitliche Öffnungen aufweist, durch die Luft aus der Spritze in den Hohlraum und in die luftführenden Kanäle der Spitze (400) gelangt.

2. Das Adapterkit nach Anspruch 1, wobei die Aufnahme eine separate Komponente ist, die mit der Kappenbaugruppe verbunden ist.

3. Das Adapterkit nach Anspruch 1, wobei die Adapterbaugruppe eine ungefähre Aufnahme zur Aufnahme eines Schafts am Spritzenkörper umfasst.

4. Das Adapterkit nach Anspruch 1, wobei die Adapterbaugruppe einen proximalen Schaft (1304, 1404, 1804, 2104) umfasst, der in den Spritzenkörper einsetzbar ist.

5. Das Adapterkit nach Anspruch 1, wobei die Adapterbaugruppe einen oder mehrere proximale luft- oder wasserführende Schläuche (404) umfasst, die in den Spritzenkörper einsetzbar sind.

6. Das Adapterkit nach Anspruch 1, wobei die Adapterbaugruppe eine Gewindeverbindung zum Spritzenkörper umfasst.

7. Das Adapterkit nach Anspruch 1, einschließlich einer Gewindeverbindung zwischen der Kappe und den Adapterbaugruppen.

8. Das Adapterset nach Anspruch 1, das eine Verbindungs-/Trennverbindung zwischen den Kappen- und Adapterbaugruppen zum Verbinden und Trennen der Kappen- und Adapterbaugruppen voneinander umfasst .

9. Das Adapterkit nach Anspruch 1, wobei die Kappen- und Adapterbaugruppen ohne die Einwegspitze (400) autoklavierbar sind.

10. Ein Verfahren, mit dem eine Dentalspritze mit einer vorhandenen Spitze (400) stattdessen durch eine Einwegspitze (400) mit einem zentralen, wasserführenden Rohr (404) ersetzt werden kann, das von einer Vielzahl von luftführenden Kanälen umgeben ist, umfasst die Schritte: Entfernen der vorhandenen Spitze (400) von der Spritze;
Koppeln einer Umrüstbaugruppe mit der Spritze, wobei die Umrüstbaugruppe ein proximales Ende aufweist, das zum Anschluss an die Spritze anstelle der vorhandenen Spitze (400) geeignet ist, und ein distales Ende mit einer Öffnung zum Aufnehmen des proximalen Endes einer Einwegspitze (400), wobei die Umrüstbaugruppe eine innere Struktur mit einem ersten Pfad zum Koppeln des Wasseranschlusses der Spritze an das wasserführende Rohr (404) der Einwegspitze (400) und einem zweiten Pfad zum Koppeln des Luftanschlusses der Spritze an die luftführenden Kanäle der Einwegspitze (400) umfasst; und
Einführen des proximalen Endes der Einwegspitze (400) in das distale Ende der Umrüstbaugruppe, so dass Wasser aus der Spritze durch das wasserführende Rohr (404) der Einwegspitze (400) fließen kann und Luft aus der Spritze durch die luftführenden Kanäle der Einwegspitze (400) fließen kann, wobei die Umrüstbaugruppe außerdem eine proximale Adapterbaugruppe (610) umfasst, die entlang ihrer Länge eine optische Faser umfasst, um Licht von einer distalen Spitze einer optischen Faser zu einem Licht emittierenden Anschluss zu leiten, der an einer Seite der Umrüstbaugruppe angeordnet ist .

11. Verfahren nach Anspruch 10, wobei die Umwandlungsbaugruppe die proximale Adapterbaugruppe umfasst, die mit einer separaten distalen Kappenbaugruppe verbunden ist.

12. Verfahren nach Anspruch 10, das den Schritt des Bereitstellens einer Umwandlungsbaugruppe mit einer proximalen Aufnahme zum Aufnehmen eines Schafts an der Spritze umfasst.

13. Verfahren nach Anspruch 10, das den Schritt des Bereitstellens einer Umwandlungsbaugruppe mit einem in die Spritze einführbaren proximalen Schaft umfasst.

14. Verfahren nach Anspruch 10, das den Schritt des Bereitstellens einer Umrüstbaugruppe mit einem oder mehreren proximalen luft- oder wasserführenden Schläuchen (404) umfasst, die in die Spritze einsetzbar sind.

15. Verfahren nach Anspruch 10, das den Schritt des Bereitstellens einer Gewindeverbindung einer Umrüstbaugruppe mit der Spritze umfasst.

## Revendications

1. Kit adaptateur permettant de connecter un embout jetable (400) à une seringue dentaire qui fournit de l'air et de l'eau via des ports d'air et d'eau séparés, le kit adaptateur comprenant l'embout (400) comportant un tube central transportant de l'eau (404). entouré d'une pluralité de canaux de transport d'air, la pointe (400) ayant une surface de base proximale avec des ouvertures vers les canaux de transport d'air, le tube de transport d'eau (404) s'étendant vers l'extérieur à partir de la surface de base , le kit comprenant :
un sous-ensemble de capuchon comprenant un corps de capuchon (402) doté d'une ouverture distale dans laquelle l'extrémité proximale de l'embout jetable allongé (400) est insérée ; et
un sous-ensemble adaptateur (610) ayant une extrémité proximale configurée pour être connectée au corps de seringue et une extrémité distale configurée pour être couplée au sous-ensemble capuchon,
le sous-ensemble adaptateur (610) comprenant une structure interne avec un premier chemin pour coupler l'orifice d'eau de la seringue au tube de transport d'eau (404) de l'embout (400) à travers le sous-ensemble capuchon, et un second chemin pour coupler l' orifice d'air de la seringue aux canaux de transport d'air de l'embout jetable (400) à travers le capuchon sous-ensemble , le sous-ensemble adaptateur (610) comprenant en outre sur sa longueur une fibre optique pour conduire l'éclairage depuis une pointe distale d'une fibre optique vers un port électroluminescent disposé sur un côté du sous-ensemble adaptateur (610) ; et
un réceptacle ayant une partie inférieure coopérant avec la surface de base proximale de l'embout (400) une fois inséré dans le sous-ensemble capuchon, le réceptacle comprenant en outre une ouverture à travers laquelle s'étend le tube de transport d'eau (404) de l'embout (400) ; dans lequel une cavité est établie entre la partie inférieure du réceptacle et la surface de base de la pointe (400) ; et
canaux de transport d'air de l'embout (400).

2. Kit adaptateur selon la revendication 1, dans lequel le réceptacle est un composant séparé couplé au sous-ensemble de capuchon.

3. Kit d'adaptateur selon la revendication 1, dans lequel le sous-ensemble d'adaptateur comprend un réceptacle approximal pour recevoir une tige sur le corps de seringue.

4. Kit adaptateur selon la revendication 1, dans lequel le sous-ensemble adaptateur comprend une tige proximale (1304, 1404, 1804, 2104) insérable dans le corps de seringue.

5. Kit adaptateur selon la revendication 1, dans lequel le sous-ensemble adaptateur comprend un ou plusieurs tubes proximaux transportant de l'air ou de l'eau (404) pouvant être insérés dans le corps de seringue.

6. Kit adaptateur selon la revendication 1, dans lequel le sous-ensemble adaptateur comprend une connexion filetée au corps de seringue.

7. Kit adaptateur selon la revendication 1, comprenant une connexion filetée entre les sous-ensembles capuchon et adaptateur.

8. Kit adaptateur selon la revendication 1, comprenant une connexion de connexion/déconnexion entre le capuchon et les sous-ensembles d'adaptateur pour connecter et déconnecter les sous-ensembles de capuchon et d'adaptateur l'un de l'autre .

9. Kit adaptateur selon la revendication 1, dans lequel les sous-ensembles capuchon et adaptateur sont autoclavables en l'absence de l'embout jetable (400).

10. Un procédé permettant à une seringue dentaire ayant un embout existant (400) de recevoir à la place un embout jetable (400) ayant un tube central transportant de l'eau (404) entouré d'une pluralité de canaux de transport d'air, comprend les étapes suivantes : retirer l'embout existant (400) de la seringue ; coupler un ensemble de conversion à la seringue, l'ensemble de conversion ayant une extrémité proximale adaptée pour être connectée à la seringue à la place de l'embout existant (400), et une extrémité distale avec une ouverture pour recevoir l'extrémité proximale d'un embout jetable (400), l' ensemble de conversion comprenant une structure interne avec un premier chemin pour coupler l'orifice d'eau de la seringue au tube de transport d'eau (404) de l'embout jetable (400) et un second chemin pour coupler l' orifice d'air de la seringue à l'air -des canaux de transport de l'embout jetable (400) ; et
insérer l'extrémité proximale de l'embout jetable (400) dans l'extrémité distale de l'ensemble de conversion de telle sorte que l'eau puisse s'écouler de la seringue à travers le tube de transport d'eau (404) de l'embout jetable (400), et l'air du la seringue peut s'écouler depuis la seringue à travers les canaux de transport d'air de l'embout jetable (400) , l'ensemble de conversion comprenant en outre un sous-ensemble adaptateur proximal (610) comprenant sur sa longueur une fibre optique pour conduire l'éclairage à partir d'un embout distal d'un fibre optique vers un port électroluminescent disposé sur un côté de l'ensemble de conversion .

11. Procédé selon la revendication 10, dans lequel l'ensemble de conversion comprend le sous-ensemble d'adaptateur proximal connecté à un sous-ensemble de capuchon distal séparé.

12. Procédé selon la revendication 10, comprenant l'étape consistant à fournir un ensemble de conversion avec un réceptacle proximal pour recevoir une tige sur la seringue.

13. Procédé selon la revendication 10, comprenant l'étape consistant à fournir un ensemble de conversion avec une tige proximale insérable dans la seringue.

14. Procédé selon la revendication 10, comprenant l'étape consistant à fournir un ensemble de conversion avec un ou plusieurs tubes proximaux transportant de l'air ou de l'eau (404) pouvant être insérés dans la seringue.

15. Procédé selon la revendication 10, comprenant l'étape consistant à fournir une connexion filetée à l'ensemble de conversion à la seringue.
